Europäisches Patentamt

European Patent Office

Office européen des brevets

(19)

(11) Numéro de publication : **0 671 639 A1**

(12) **DEMANDE DE BREVET EUROPEEN**

(21) Numéro de dépôt : 95400492.5

(22) Date de dépôt : 07.03.95

(51) Int. Cl.$^6$ : **G02B 5/122**, G01S 7/48

(30) Priorité : **10.03.94 FR 9402773**

(43) Date de publication de la demande :
**13.09.95 Bulletin 95/37**

(84) Etats contractants désignés :
**DE GB IT**

(71) Demandeur : **AEROSPATIALE Société Nationale Industrielle**
**37, Boulevard de Montmorency**
**F-75781 Paris Cédex 16 (FR)**

(72) Inventeur : **Kasser, Michel**
**5, avenue Naast**
**F-94340 Joinville-le-Pont (FR)**
Inventeur : **Lund, Glenn**
**Calada**
**F-06440 Peillon (FR)**

(74) Mandataire : **Rinuy, Santarelli**
**14, avenue de la Grande Armée**
**F-75017 Paris (FR)**

(54) **Cible rétroréflectrice pour télémétrie laser.**

(57)  Une cible rétroréflectrice pour télémétrie laser comporte au moins un rétroréflecteur en coin de cube creux comportant trois surfaces réfléchissantes (1, 2, 3) sensiblement planes et perpendiculaires l'une à l'autre et se coupant en trois arêtes sensiblement orthogonales convergeant en un sommet (S), à ce rétroréflecteur en coin de cube étant associé une normale géométrique faisant un même angle avec chacune desdites arêtes, cette cible comportant un point de référence (O) sensiblement situé sur cette normale à l'opposé des surfaces réfléchissantes à une distance e.$\sqrt{3}$ du sommet (S), où e est la distance de ce point de référence à chacune desdites surfaces, cette cible étant caractérisée en ce qu'elle comporte, en regard de chaque surface réfléchissante, une lame à faces parallèles (E1, E2, E3), transparente au rayonnement lumineux à rétroréfléchir, constituée en un matériau d'indice de réfraction connu n, les lames associées (E1, E2, E3, CV) audit rétroréflecteur ayant une même épaisseur e' telle que, au moins approximativement,

$$e'.\sqrt{n} = 2,35e$$

Fig.3

L'invention concerne la télémétrie laser notamment spatiale. Elle concerne en particulier la télémétrie laser sur satellites artificiels (en abrégé SLR = Satellite Laser Ranging, en anglais). Cette télémétrie consiste à mesurer le temps mis par une impulsion laser pour faire l'aller-retour entre par exemple une station laser terrestre et une cible portée par un satellite (ou l'inverse) et à convertir ensuite (en tenant compte de la correction de divers effets déterministes) cette mesure de temps en une distance (instantanée) entre un point de référence de la station laser et le centre de masse du satellite. La télémétrie laser s'étend au cas où la mesure de distance se fait entre deux satellites artificiels, entre un satellite et une cible au sol, voire plus généralement entre objets célestes, naturels ou artificiels.

Il est utile de rappeler que toutes les solutions de satellite "laser" orbitant à ce jour autour de la Terre (telles que LAGEOS I et II, AJISAI, STARLETTE et STELLA) ont été conçues à une époque où la télémétrie laser n'était que peu précise et les lasers employés peu puissants (par rapport à ce qu'on sait réaliser aujourd'hui). Ces satellites étaient donc optimisés de façon à ce que la cible comporte de nombreux petits rétroréflecteurs en "coin de cube" (de 60 à plus de 2000 selon les cas) capables, pour toute orientation du satellite, de renvoyer vers la station d'émission une quantité de lumière suffisante pour être détectée. Peu importait qu'ils ne soient pas, à l'instant de tout tir laser, tous exactement à la même distance de cette station d'émission, à quelques centimètres, voire décimètres, près.

Depuis quelques années la situation a beaucoup évolué, de telle sorte qu'avec les stations de télémétrie laser actuelles, la durée des impulsions peut descendre jusqu'à de l'ordre d'une dizaine de picosecondes (1 ps = $10^{-12}$ secondes) et la précision de mesure sur un écho unique n'est pas loin d'atteindre le millimètre. Il n'en va pas de même pour la précision finale des mesures réalisées, à cause de la multiplicité des échos (un écho par rétroréflecteur visible par l'émetteur à l'instant du tir) qui provoque un étalement temporel (on parle parfois de "signature") des impulsions de retour, lesquels échos ne peuvent être associés de façon individuelle et précise à la distance instantanée du centre de masse du satellite.

Même avec des outils de télémétrie laser très évolués, cet effet rend pratiquement impossible, à partir d'une seule impulsion émise, la détermination de la distance des satellites laser avec une précision absolue meilleure que le centimètre (et encore, seulement dans des cas spécifiques de petits satellites).

Pour être complet, il faut se rappeler que la vitesse transversale relative entre satellite et station laser conduit à un phénomène d'aberration de vitesse que l'on a cherché à corriger sur les satellites existants, en donnant, aux angles entre les faces réfléchissantes des coins de cube élémentaires, de faibles écarts ("défauts") par rapport à la valeur nominale de 90°.

D'autre part, ces coins de cube, généralement pleins, ont été volontairement conçus de petite taille (3 à 4 cm de diamètre), pour deux raisons :
- la figure de diffraction de l'onde lumineuse qu'ils renvoient est formée, grâce aux effets produits par les petits défauts d'angle, plutôt que de six lobes distincts et disjoints, d'une sorte de couronne continue dont le rayon et la largeur correspondent aux valeurs nécessaires pour une compensation adéquate de l'aberration de vitesse,
- grâce aux petites dimensions des coins de cube, les gradients de température susceptibles d'apparaître à l'intérieur du verre constituant ces coins de cube restent faibles, avec par conséquent de faibles effets de dégradation de la figure de diffraction résultante.

Dans ces conditions, on ressent le besoin de satisfaire, dans la mesure du possible, les besoins suivants :

α - le retour vers le récepteur de la station d'émission d'une quantité suffisante de flux (énergie) à l'aide d'une correction adéquate de l'aberration de vitesse, tout en minimisant la "signature" temporelle (il est admis qu'il n'est pas essentiel que l'efficacité de rétroréflexion du satellite soit constante au cours des mouvements (mal connus) de celui-ci) ;

β - l'élimination de toute influence pouvant élargir temporellement les impulsions renvoyées par le satellite ;

γ - l'obtention d'une incertitude quasi-nulle (idéalement inférieure ou égale à 1 mm), quelle que soit la géométrie d'incidence des impulsions lumineuses sur le satellite, dans la détermination de la distance entre un point de référence de la station laser et le centre de masse du satellite, à partir des mesures de distance des rétroréflecteurs ;

δ - une densité maximale de l'ensemble permettant une minimisation des perturbations provenant de forces non-gravitionnelles.

Dans le contexte des besoins de la géodésie évoqués ci-dessus, il a déjà été proposé, dans le document EP-0.506.517 et dans le document FR-2.691.129 ou EP-571.256, d'assembler un petit nombre de grands rétroréflecteurs sur une structure commune, de façon à constituer un microsatellite géodésique permettant aux stations existantes et futures d'atteindre une précision de mesure millimétrique dans la mesure des grandes distances.

L'utilisation de grands rétroréflecteurs en coins de cube (RCC en abrégé) creux (plutôt que pleins sur les satellites actuels) devrait permettre un dimensionnement adéquat du bilan énergétique obtenu avec le système satellite + RCC. Compte tenu de l'énergie et de la durée des impulsions émises par les stations modernes de télémétrie laser, en supposant des altitudes d'orbite pour ce type de satellite comprises entre 300 et 6000 km, et compte tenu de l'étalement angulaire de l'énergie rétrodiffusée par les RCC et de la taille typique du télescope de réception d'une telle station (diamètre de pupille de l'ordre de 50 cm), on peut démontrer qu'un rétroréflecteur unique, caractérisé par un diamètre typiquement compris entre 10 et 20 cm, devrait pouvoir satisfaire les besoins du système en bilan énergétique.

Selon une disposition préférée du document FR-2.691.129 précité, la cible est formée de 8 coins de cube ayant leurs sommets à proximité les uns des autres.

Dans ce cas de figure, seuls les rayons en incidence rasante par rapport à la face réfléchissante d'un des coins de cube (et par conséquent d'efficacité nulle au retour vers la station) peuvent éventuellement être dans la zone de visibilité d'un ou plusieurs des RCC voisins. Comme il s'agit d'un cas rare, on peut admettre que cette configuration est caractérisée par un non-recouvrement de champ de vue des rétroréflecteurs, c'est-à-dire conduisant à un écho unique détecté au retour.

La question se pose alors de déterminer la distance au centre de masse (ou à tout autre point de référence) de la cible, à partir d'un tel écho unique renvoyé par un RCC dont le sommet est à distance de ce centre de masse (ou point de référence), lorsque l'on cherche à s'abstraire d'une quelconque exigence en contrôle d'attitude, ou plus généralement lorsque l'on cherche à s'abstraire d'une quelconque exigence en orientation relative entre émetteur/-récepteur laser (E/R) et RCC (le RCC peut être au sol, sur la Terre ou sur la Lune, et l'E/R suivre une trajectoire d'orientation aléatoire vis à vis du RCC).

En d'autres termes, la question est de définir la distance entre un point de référence de l'E/R et un point de référence associé au RCC situé à distance du sommet du RCC à partir de la distance que l'on sait mesurer, à partir d'un écho unique renvoyé par ce RCC, entre ce point de référence de l'E/R et le sommet du RCC, lorsque :

- on connaît la position du point de référence associé au RCC vis à vis du sommet de ce dernier,
- mais on ignore a priori l'orientation vis à vis du RCC de la direction selon laquelle ce RCC reçoit et renvoie le rayonnement laser formant ledit écho unique.

Lorsque le RCC est embarqué sur un satellite (en pratique de petite taille), le point de référence associé est le plus souvent le centre de masse de celui-ci ; dans ce cas, si ce satellite comporte plusieurs RCC susceptibles de renvoyer un écho unique, le centre de masse a de préférence une même position vis à vis de chacun desdits RCC. Plus généralement, lorsque le RCC fait partie d'une pluralité de RCC montés sur une même structure porteuse fixe par rapport à un objet naturel ou artificiel (Terre, Lune ou satellite de taille quelconque) le point de référence est choisi en sorte d'avoir une même position par rapport à chacun des RCC. Dans le cas le plus simple, ce point de référence des RCC est situé sur la normale de chacun de ceux-ci à une même distance $d_o$ du sommet S de ces RCC (la convergence au moins approximative des normales de tous les RCC en un même point est alors une contrainte d'implantation desdits RCC). Ce cas simple se généralise à un RCC unique, dont le point de référence O est à une distance négative $d_o$ du sommet S sur la normale $\vec{n}$ dudit RCC.

Cette distance $d_o$ est parfois appelée "constante optique".

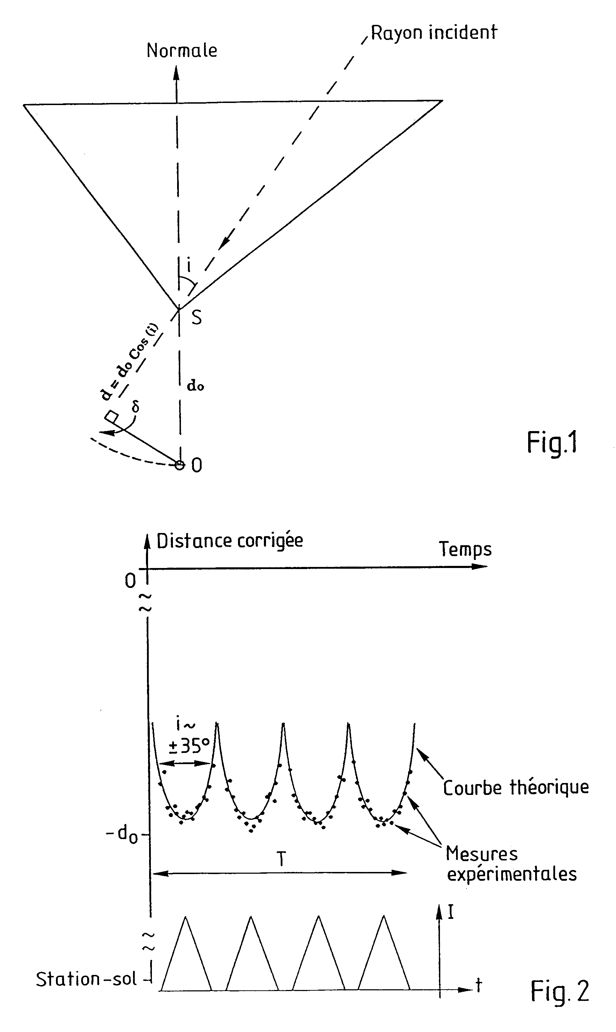

Cette constante optique est la correction qui est à appliquer à la distance mesurée (E/R - sommet RCC) pour avoir la distance audit point de référence lorsque ce RCC est visé selon sa normale. Comme indiqué dans la figure 1, pour un rayon faisant un angle d'incidence quelconque i par rapport à la normale, la valeur correspondante de correction d est inférieur à $d_o$ et dépend de i. La valeur de d est donnée par l'expression $d = d_o \cos(i)$. La valeur moyenne ($d_{moy}$) de d et les excursions - dits écarts $\delta$ - par rapport à cette moyenne dépendent, d'une part de $d_o$ et d'autre part, de l'ensemble des directions d'incidence i pour lesquelles les mesures peuvent être réalisées. A titre d'exemple, si les mesures ne sont prises en compte que pour des rayons compris dans un cône de demi-angle 35° par rapport à la normale du RCC (c'est-à-dire pour $i \leqslant 35°$), on peut démontrer que $d_{moy}$ vaut approximativement $0,9\,d_o$ et que les écarts extrêmes de $\delta$ par rapport à $d_{moy}$ atteignent une valeur de $\pm\,0,1\,d_o$. Si on prend $d_o = 5$ cm, on trouve ainsi une valeur moyenne : $d_{moy}$ voisine de 4,5 cm et des écarts extrêmes tels que :

- 0,5 cm $\leqslant \delta \leqslant$ + 0,5 cm.

On constate ainsi que (cela était déjà exposé dans le document EP-571.256) la correction à apporter à la distance au sommet S pour avoir la distance au point de référence O (si i varie entre O et 35° dans n'importe quelle direction transversale à la normale du RCC) varie entre $0,8\,d_o$ et $d_o$ ; en d'autres termes $0,9$ do donne une estimation de cette correction à $0,1$ $d_o$ près.

L'invention vise, dans le contexte précité, à minimiser cette incertitude vis à vis de $d_o$.

Elle propose à cet effet une cible rétroréflectrice pour télémétrie laser comportant au moins un rétroréflecteur en coin de cube creux comportant trois surfaces réfléchissantes sensiblement planes et perpendiculaires l'une à l'autre et se coupant en trois arêtes sensiblement orthogonales convergeant en un sommet, à ce rétroréflecteur en coin de cube étant associé une normale géométrique faisant un même angle avec chacune desdites arêtes, cette cible comportant un point de référence sensiblement situé sur cette normale à l'opposé des surfaces réfléchissantes à une distance $e.\sqrt{3}$ du sommet, où $e$ est la distance de ce point de référence à chacune desdites surfaces, cette cible étant caractérisée en ce qu'elle comporte, en regard de chaque surface réfléchissante, une lame à faces parallèles, transparente au rayonnement lumineux à rétroréfléchir, constituée en un matériau d'indice de réfraction connu $n$, les lames associées audit rétroréflecteur ayant une même épaisseur $e'$ telle que, au moins approximativement :

$$e'.\sqrt{n} = 2,35e$$

Selon des dispositions préférées de l'invention, éventuellement combinées :

- Les lames transparentes constituent une pyramide transparente à section polygonale disposée en regard du rétroréflecteur en coin de cube et ayant sa normale confondue avec la normale de ce dernier,
- cette pyramide est de section triangulaire équilatérale,
- cette pyramide est au moins approximativement un coin de cube,
- cette cible comporte une pluralité de rétroréflecteurs en coin de cube creux qui admettent un même point de référence situé sur leurs normales respectives, chacun de ces rétroréflecteurs en coin de cube étant muni de trois lames transparentes à faces parallèles, parallèles aux surfaces réfléchissantes dudit rétroréflecteur à faces parallèles,
- le point de référence est à une même distance des faces réfléchissantes de chaque rétroréflecteur en coin de cube et les lames transparentes ont un même indice de réfraction $n$ et une même épaisseur $e'$,
- les coins de cube forment conjointement au moins une partie d'un cube entourant la pluralité de rétroréflecteurs en coin de cube,
- cette cible comporte huit rétroréflecteurs en coin de cube,
- les lames transparentes sont en verre,
- cette cible est un satellite dont le centre de masse constitue le point de référence,
- ce satellite comporte pour les rétroréflecteurs en coin de cube une structure porteuse formée de trois panneaux orthogonaux entre eux,
- ce satellite est en autorotation autour d'un axe parallèle à deux de ces panneaux, le troisième panneau étant bordé par une masse de lestage.

Des objets, caractéristiques et avantages de l'invention ressortent de la description qui suit, donnée à titre d'exemple non limitatif, en regard des dessins annexés sur lesquels :

- la figure 1 est un schéma représentant un rétroréflecteur à coin de cube classique, sa normale, son point de référence et la correction à effectuer,
- la figure 2 est une courbe corrélant, pendant une révolution d'un satellite connu à huit RCC sensiblement accolés, les variations au cours du temps des mesures brutes de distance et de l'intensité I des échos reçus en retour,
- la figure 3 est une représentation schématique d'un rétroréflecteur à coin de cube faisant partie d'une cible rétroréflectrice conforme à l'invention,
- la figure 4 est une vue schématique en perspective d'une cible rétroréflectrice à huit coins de cubes à l'intérieur d'une cage transparente, et
- la figure 5 est une vue en coupe, selon un plan parallèle à des faces de RCC, d'une cible rétroréflectrice modulaire, dont deux emplacements de RCC sont laissés vacants pour la clarté du dossier.

L'exposé qui va suivre concerne, à titre d'exemple, le cas d'un satellite formé d'une pluralité de RCC, par exemple un satellite décrit dans la demande de brevet français n° 92-05989 avec huit RCC dont les faces sont parallèles et les sommets sont à une même distance $d_o$ d'un point de référence, situé au moins approximativement sur la normale de chaque RCC, confondu avec le centre de masse de ce satellite. Ce satellite est en autorotation autour d'un axe d'autorotation sensiblement fixe dans l'espace (ou ayant une orientation qui varie lentement au cours du temps) d'orientation de préférence (mais pas nécessairement) connue par rapport audit satellite. Ce satellite suit une orbite connue. Ce satellite constitue une cible pour une pluralité de stations laser au sol (SLR en abrégé) comportant chacune un émetteur/récepteur laser noté E/R ayant un point de référence. Cette station au sol comporte des moyens de traitement classiques en soi adaptés à donner, à partir d'un écho unique en retour renvoyé par un RCC de ladite cible, un résultat brut de mesure de ladite distance instantanée entre le point de référence de l'E/R et la position qu'avait le sommet dudit RCC au moment où ce RCC a renvoyé l'écho unique considéré, selon une incidence a priori inconnue vis à vis de la direction instantanée de la normale dudit RCC.

L'analyse d'une succession de résultats bruts de mesure de distance entre cette station-sol et le satellite laser permet d'établir avec une très grande précision relative la trajectoire de celui-ci le long de son orbite. Dans l'hypothèse où la station laser est capable de donner ces résultats bruts avec une précision millimétrique, le mode de correction par calcul indiqué précédemment ($0,9\ d_o$) aurait en principe, pour l'estimation de la distance au centre, une précision relative de mesure suffisante pour mettre en évidence des fluctuations périodiques (à l'échelle de quelques millimètres) de position apparente de ce centre de masse par rapport à la trajectoire nominale, localement lisse, à laquelle on pourrait s'attendre.

Cette grande sensibilité permettrait justement de détecter les fluctuations périodiques de cette position apparente qui seraient engendrées par la non prise en compte des écarts δ variables en fonction de i, au cours de l'auto-rotation du satellite ; ces fluctuations de position apparente pourraient probablement être confirmées par corrélation avec les fluctuations de l'intensité moyenne des échos de retour (si de telles mesures d'intensité étaient accessibles, ce qui n'est pas toujours le cas avec les stations existantes), sachant que cette intensité a une dépendance sensiblement déterministe vis à vis de l'angle d'incidence i (l'intensité est généralement maximale pour i = 0°, et tend vers zéro pour i ∼ 40°).

A partir de la connaissance a priori, lors de son largage, de l'orientation et de la vitesse angulaire d'auto-rotation du satellite dans l'espace, on pourrait déceler et quantifier une éventuelle évolution lente et progressive de ces paramètres (qui pourrait par exemple être engendrée par un effet de précession ou de perturbation de cette orientation, ou par un ralentissement de sa vitesse angulaire induit par exemple par des frottements dans la très haute atmosphère), lors du dépouillement des données de mesure estimée de distance, obtenues au cours du temps par les diverses stations SLR dans le monde visant ce même satellite. Ce suivi permettrait le développement d'un modèle précis, réactualisé avec une fréquence adéquate, de prédiction de ces paramètres rotationnels du satellite, qui serait disponible à tous les utilisateurs.

Il s'ensuit que pour chaque impulsion émise, la valeur instantanée de i pourrait être déterminée avec une bonne précision, en corrélant la périodicité et l'amplitude (prédites) de sa valeur avec les valeurs de sa position apparente mesurée. Cette corrélation est illustrée sur la figure 2 où sont représentés des points correspondant à des valeurs expérimentales de mesure de la distance du sommet des RCC (corrigées des variations dues à la trajectoire nominale du satellite) qui sont comparées avec des courbes continues correspondant aux variations prédites par un modèle basé sur la connaissance a priori de la géométrie du satellite et du suivi au cours du temps de son autorotation. Un ajustement par exemple "aux moindres carrés" de ces deux ensembles de valeurs permettrait de corriger avec précision les influences géométriques liées aux variations de i.

Sur cette figure, la valeur de O sur l'échelle des distances, à gauche, correspond à une correction nulle pour avoir la distance réelle du centre de masse et la valeur $d_o$ correspond à la mesure brute obtenue lorsque i est nulle, c'est-à-dire lorsque l'écho reçu en retour a circulé parallèlement à la direction instantanée de la normale du RCC au moment du renvoi de cet écho par ledit RCC ; T est la durée d'une révolution du satellite ; et la courbe du bas représente l'intensité de l'écho en retour (en négligeant le temps de parcours de l'écho entre son renvoi par le RCC et sa détection par l'E/R).

La précision dans l'estimation de i, nécessaire pour une excellente correction des mesures expérimentales de distance, est donnée par l'exemple suivant : pour les valeurs de $d_o$ = 5 cm et i ≤ 35°, une erreur dans l'estimation de i inférieure à 1° permettrait de réduire l'incertitude sur la correction de distance expérimentale du centre de masse à un niveau inférieur à 0,5 mm.

Les moyens de post-correction (donc d'estimation) des fluctuations de δ évoqués ci-dessus dépendraient d'un certain nombre de conditions, telles que la bonne stabilité inertielle de l'autorotation du satellite, et l'analyse systématique de ces paramètres par plusieurs stations SLR afin d'établir, et maintenir, le modèle prédictif. A la date d'aujourd'hui, personne ne sait si ce type d'analyse est réaliste et si elle permettra réellement d'obtenir les corrections millimétriques recherchées.

Les inventeurs ont donc songé à une approche alternative qui permette de réduire physiquement les écarts δ à un niveau très faible.

A cet effet, l'invention enseigne d'inclure entre l'extérieur de la cible et les surfaces réfléchissantes des RCC une épaisseur de verre parallèle à chacune de ces surfaces, dans le chemin optique des rayons rétroréfléchis, de sorte que (en fonction de i) les écarts δ évoqués ci-dessus soient compensés, au mieux, par les variations du chemin optique des éléments de verre traversés.

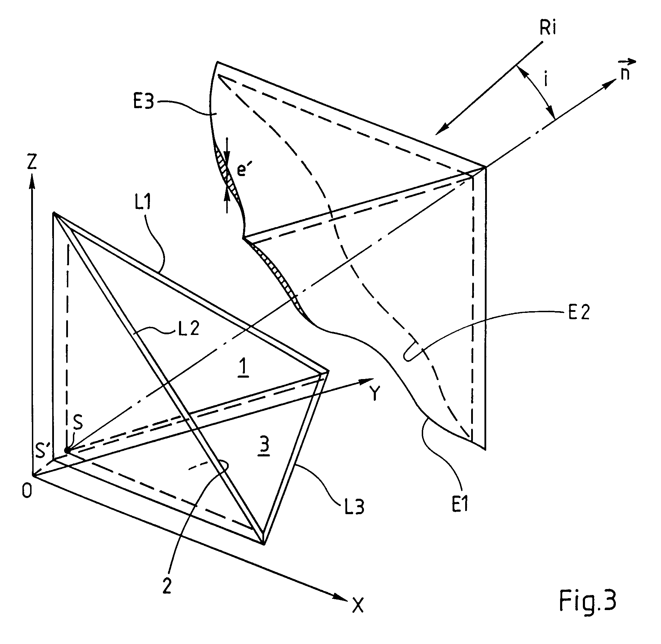

La figure 3 représente schématiquement un RCC faisant partie d'une cible rétroréflectrice. Ce RCC est représenté dans un repère de référence OXYZ tel que O soit le point de référence de la cible, et les axes X, Y et Z sont parallèles aux arêtes du RCC.

Ce RCC comporte trois surfaces réfléchissantes sensiblement planes, se coupant sensiblement à angle droit en trois arêtes sensiblement orthogonales convergeant en un sommet S.

Les usages précités du mot sensiblement visent à tenir compte d'éventuels défauts de planéité des surfaces réfléchissantes ou d'éventuels écarts à 90° des angles entre arêtes ou entre surfaces réfléchissantes ou entre arêtes que l'on peut être amené à introduire à des fins de compensation d'aberration de vitesse.

Dans l'exemple considéré, les surfaces réfléchissantes 1, 2 et 3 sont constituées par les faces avant métallisées de trois lames de verre à faces parallèles L1, L2 et L3, définissant conjointement un coin de cube de normale $\vec{n}$ .

La normale $\vec{n}$ est confondue avec la normale du coin de cube géométrique formé par les surfaces OXY, OYA et OZX, c'est-à-dire avec une direction formant un même angle avec les axes $\vec{X}$ , $\vec{Y}$ et $\vec{Z}$ .

L'intersection S des surfaces réfléchissantes (c'est ici le sommet en creux du RCC tandis que S' désigne le sommet en saillie) est à une distance $e\sqrt{3}$ du point de référence 0, si $e$ est la distance du sommet S vis à vis de chacune des faces du repère OXYZ ($e$ est donc un excentrement).

En variante non représentée, les faces réfléchissantes peuvent être les faces arrière métallisées de lames transparentes (c'est-à-dire transparentes au rayonnement à rétroréfléchir) par exemple en verre. Dans ce cas, pour éviter les réflexions d'un rayon incident Ri sur les faces avant des lames de verre, ces faces avant font avantageusement l'objet d'un traitement préalable anti-reflets.

En regard de chaque surface réfléchissante 1, 2 ou 3, est disposée une lame transparente à faces parallèles E1, E2 ou E3, transparente au rayonnement lumineux à rétroréfléchir, ces lames transparentes ayant une même épaisseur $e'$ et un même indice de réfraction $n$. Le rayonnement incident Ri traverse dans un sens l'une des lames transparentes avant de rentrer dans la cible ; après avoir été réfléchi par les surfaces réfléchissantes du RCC, ce rayonnement traverse ensuite, dans l'autre sens, l'une desdites lames transparentes (la même ou non qu'à l'entrée). La présence de ces lames transparentes a pour effet d'induire sur le rayonnement une différence de marche optique d'autant plus importante que l'incidence de ce rayonnement est faible par rapport à la lame considérée. Il en résulte, si l'on se réfère à la normale du coin de cube, que la différence de marche optique est d'autant plus faible que l'incidence du rayonnement est grande par rapport à ladite normale.

L'intérêt est que, en choisissant de façon appropriée l'épaisseur $e'$ des lames E1, E2 et E3 il est possible de tirer parti de la dépendance de la différence de marche optique vis à vis de l'incidence pour compenser au moins en partie la dépendance, vis à vis de l'incidence, de la correction à apporter pour passer de la distance E/R-S à la distance E/R-O.

Ainsi par exemple, trois essais ont été conduits pour une valeur d'excentrement $e$ de 10 mm et une excursion maximale de 30° du rayonnement vis à vis de la normale du RCC,

Exemple 1 :

lame en verre courant type BK7 avec n = 1,5
    e' = 19,5 mm
    2δ = 0,44 mm

Exemple 2 :

lames en flints (c'est-à-dire ...) extra-denses avec :
    n = 1,8
    e' = 17,3 mm
    2δ = 0,42 mm

Exemple 3 :

lames en Zn-Sc avec n = 4 et avec un rayonnement infrarouge de 10 μm de longueur d'onde
    e' = 11,8 mm
    2δ = 0,41 mm

On peut noter que les fluctuations maximales δ de la correction de distance à effectuer est de moins de 0,25 mm.

Il semble raisonnable de corréler les résultats précités sous l'expression empirique suivante :

$$e'.\sqrt{n} = 2,35.e$$

qui traduit l'existence d'une proportionnalité entre $e$ et $e'$.

En fait, les fluctuations de la correction de distance à effectuer sont indiquées ci-dessus sous la forme 2δ ; cela provient de ce qu'il s'agit en fait de l'amplitude pic à pic de la correction à effectuer. La valeur moyenne de ces corrections (correspondant au milieu de l'intervalle 2δ précité) était de 4,5 mm environ.

Bien entendu, les fluctuations maximales δ sont d'autant plus faibles que l'on réduit l'écart angulaire maximal autorisé entre la direction du rayonnement et la normale du RCC.

Dans l'exemple considéré, les lames transparentes E1, E2 et E3 constituent une partie d'un coin de cube transparent de normale confondue avec celle du RCC et dont la concavité fait face à celle dudit RCC.

La cible complète à laquelle appartient le RCC de la figure 3 peut être un microsatellite à huit coins de cube tel que décrit dans le document EP-571 256.

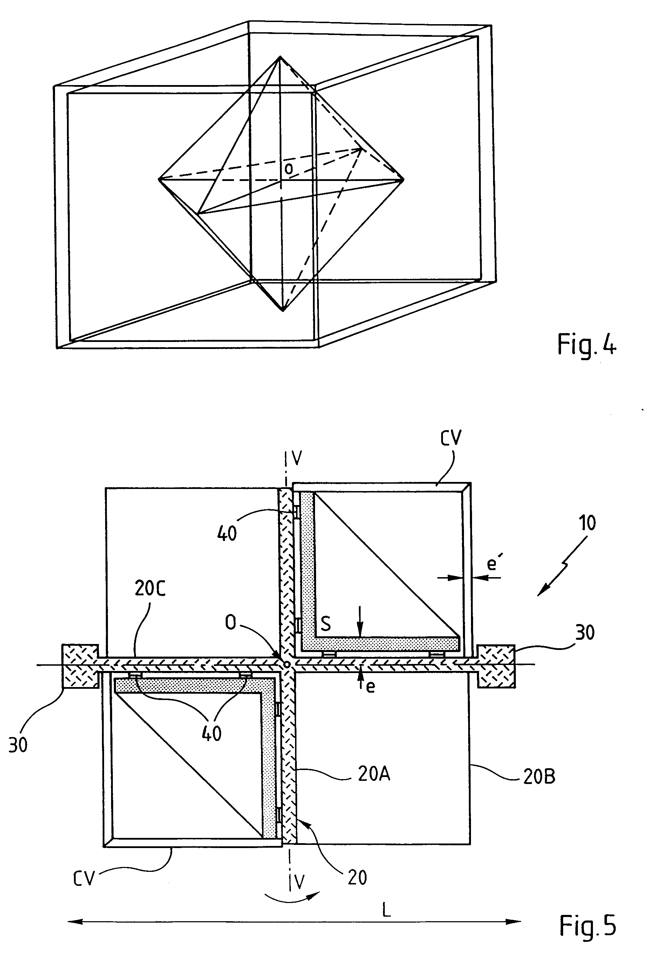

C'est ainsi que, selon une variante de réalisation schématisée à la figure 4, la cible est un ensemble de huit RCC creux dont les sommets sont à proximité les uns des autres, à l'intérieur d'une cage de verre cubique formée de feuilles de verre à faces parallèles entre elles et parallèles aux surfaces réfléchissantes des RCC. Ces feuilles de verre ont une même épaisseur.

A la figure 4, les arêtes internes de la cage de verre sont représentées en plein pour visualiser que cette cage de verre est transparente et l'épaisseur entre faces réfléchissantes voisines du RCC a été négligée par simplification.

En fait, l'ensemble de RCC est avantageusement modulaire (voir la figure 5), c'est-à-dire que le nombre de RCC est choisi en fonction des besoins, avec un coin de cage de verre CV en regard de chaque RCC (la cage de verre est ainsi elle-même modulaire, étant formée de huit coins de cube distincts).

Sur cette figure 5, la cible rétroréflectrice 10 comporte une structure centrale 20 formée de 3 panneaux 20A, 20B et 20C à angles droits (ici carrés), à l'intersection commune desquels se trouve le centre de masse O de la cible. En variante les panneaux de structure sont des disques.

Dans l'exemple considéré, la cible est destinée à être mise en autorotation autour d'un axe V-V parallèle au croisement de deux panneaux (20A et 20B) tandis qu'un lestage 30 de toute forme connue appropriée est assujetti au bord libre du dernier panneau (20C).

Le côté L du cube, au sein duquel est inclus la cible (y compris le lestage) est par exemple de l'ordre de 500 mm, voire inférieur à cette valeur.

Au sein des coins formés par les panneaux, sont fixés des RCC, au moyen d'organes de fixation 40 de tout type connu approprié.

Comme précédemment, on appelle $\underline{e}$ la distance du sommet S des RCC à chaque face $\underline{du}$ repère de référence, e' l'épaisseur des lames constituant le coin de cage transparente, et $\underline{n}$ l'indice de réfraction de ce matériau.

Les RCC peuvent être (voir ci-dessus) réalisés en matériau transparent et être métallisés sur leurs faces arrière ; ils sont ici complètement creux, en ce sens que ce sont leurs faces intérieures qui sont revêtues d'un revêtement réfléchissant, permettant ainsi de considérer des matériaux opaques autres que le verre (par exemple un métal ou une céramique avec des propriétés mécano-thermiques plus favorables). L'utilisation d'un tel autre matériau, choisi en fonction d'une étude comparative, pourrait éventuellement également permettre le choix d'un plus faible excentrement $\underline{e}$ des RCC, avec une diminution correspondante des variations en δ.

Bien entendu, on peut combiner à la présence de lames de verre le post-traitement indiqué ci-dessus à propos de la figure 2, en tirant parti si nécessaire des fluctuations périodiques de distance attribuables aux variations périodiques de $\underline{i}$, et/ou des fluctuations périodiques de l'intensité des échos détectés en retour.

L'ensemble de la figure 5 peut être entièrement passif, avec ni élément de stabilisation, ni composant électrique ou électronique.

L'ensemble est en principe réalisé de sorte que son centre de masse soit situé, à mieux que le millimètre, de façon équidistante par rapport à chacun de ces sommets, et que la normale de chacun des RCC passe à moins d'un millimètre du centre de masse. A cet effet, la structure centrale est conçue en sorte d'unir les éléments optiques modulaires de façon précise par rapport au centre de masse. La modularité des éléments est une caractéristique intéressante qui facilite l'échange des composants défectueux ou endommagés.

Le microsatellite est par exemple destiné à parcourir une orbite autour d'une planète, tout en tournant librement sur lui-même, à une vitesse angulaire d'autorotation typiquement de l'ordre de un tour par minute. Il est important de signaler que cette autorotation est souhaitée non seulement pour des raisons de détermination de $\underline{i}$ (voir figure 2) mais aussi pour des raisons d'équilibre thermique de l'ensemble, traitées plus loin.

Pour ce qui concerne l'axe d'autorotation, il est souhaitable que celui-ci soit référencé par rapport à une direction préférée du satellite qui correspond à l'axe d'inertie principale. Cette condition est satisfaite, dans une disposition préférée, grâce à un lestage préférentiel de la structure centrale comme indiqué sur la figure 5 ; ceci est réalisé (comme indiqué ci-dessus) par exemple en prolongeant et en lestant cette structure selon un de ses 3 plans orthogonaux. Pour des raisons de stabilité de cette rotation, il est préférable que le moment d'inertie principale ait une valeur au moins deux fois plus, et de préférence à peu près dix fois plus élevée que celle de ces autres moments.

Lors du largage du satellite depuis la fusée de lancement, il conviendra d'initialiser cette autorotation autour de l'axe d'inertie principale. L'ensemble aura tendance à maintenir son autorotation autour de ce même axe, même en présence des perturbations typiques de l'environnement spatial (couples gravitationnels, couples de pression de radiation ou de traînée différentielle).

Pour des raisons d'équilibre thermique, il sera préférable que cet axe de rotation soit orienté dans l'espace selon une direction sensiblement perpendiculaire à celui appelé "l'écliptique", c'est-à-dire le plan imaginaire décrit par la Terre pendant son orbite autour du Soleil. De cette façon, du moins au début de la vie du satellite, chacun des RCC sera exposé, pendant une révolution du satellite autour de son axe d'autorotation, de manière sensiblement égale aussi bien au rayonnement solaire qu'à l'espace froid. Cette disposition permet de minimiser les contraintes thermomécaniques (avec par conséquent un maintien correct des performances optiques de renvoi des impulsions incidentes voire de correction de l'aberration de vitesse) qui pourraient autrement être engendrées par des différences importantes de température entre les différents RCC (plutôt éclairés par le Soleil ou plutôt à l'ombre).

Pour des raisons de faible dégradation d'orbite (lorsque le satellite est destiné à une mission géodésique) et de vitesse d'autorotation, il peut être important de maintenir un rapport masse/superficie (c'est-à-dire densité moyenne) aussi élevé que possible, tout en respectant les contraintes optiques, mécaniques et thermiques de l'ensemble.

Des matériaux tels que l'INVAR ou des alliages à base de tungstène peuvent donc être considérés pour la structure centrale. L'utilisation de ces mêmes matériaux pour la fabrication des coins de cube peut être avantageuse pour les mêmes raisons de densité moyenne élevée.

En conséquence d'un besoin d'uniformité des éventuelles dégradations de l'orbite, il peut être important de veiller à ce que l'extérieur du satellite, compte tenu des effets de la traînée atmosphérique (basses orbites) et de la pression de radiation, présente une bonne symétrie de révolution moyenne quelle que soit l'orientation de celui-ci par rapport au plan d'orbite. Ceci est le cas pour la structure proposée, même si elle présente des dicontinuités anguleuses.

En se basant sur les épaisseurs typiques indiquées, on peut s'attendre à une masse totale du satellite de l'ordre de 100 kg, ce qui reste dans le domaine des microsatellites.

D'autres applications possibles de ce concept se retrouvent dans le cas de la télémétrie laser terrestre ou aéroportée, voire en télémétrie laser depuis un instrument en orbite sur des réflecteurs également en orbite ou terrestres, à chaque fois que l'on veut mesurer avec précision l'éloignement (éventuellement très grand) d'un corps par rapport à un autre.

Il va de soi que la description qui précède n'a été proposée qu'à titre d'exemple non limitatif et que de nombreuses variantes peuvent être proposées par l'homme de l'art sans sortir du cadre de l'invention. En particulier, la cible peut être sur le sol d'un objet céleste naturel (Terre, Lune, ...) ou artificiel (satellite dédié à d'autres missions). De même, on peut admettre des excentrements différents pour les divers RCC, avec des lames de verre dont l'épaisseur respecte la condition précitée vis à vis de cet excentrement.

D'autre part, les lames transparentes à faces parallèles peuvent ne pas être parallèles aux faces réfléchissantes. Ce n'est pas nécessaire du point de vue optique.

En fait, le calcul montre qu'il peut y avoir avantage à ce que ces faces parallèles constituent une pyramide à section triangulaire plus pointue qu'un coin de cube ; de manière générale, cette pyramide peut présenter entre ses faces adjacentes un angle compris entre 50° et 110°. Compte tenu de ce que l'axe du RCC et donc de la pyramide est une sorte d'axe de symétrie du RCC, il n'est pas nécessaire que la pyramide soit de section triangulaire : le nombre de faces peut être supérieur à 3.

## Revendications

1. Cible rétroréflectrice pour télémétrie laser comportant au moins un rétroréflecteur en coin de cube creux comportant trois surfaces réfléchissantes (1, 2, 3) sensiblement planes et perpendiculaires l'une à l'autre et se coupant en trois arêtes sensiblement orthogonales convergeant en un sommet (S), à ce rétroréflecteur en coin de cube étant associé une normale géométrique faisant un même angle avec chacune desdites arêtes, cette cible comportant un point de référence (O) sensiblement situé sur cette normale à l'opposé des surfaces réfléchissantes à une distance $e.\sqrt{3}$ du sommet (S), où $e$ est la distance de ce point de référence à chacune desdites surfaces, cette cible étant caractérisée en ce qu'elle comporte, en regard de chaque surface réfléchissante, une lame à faces parallèles (E1, E2, E3), transparente au rayonnement lumineux à rétroréfléchir, constituée en un matériau d'indice de réfraction connu $n$, les lames associées (E1, E2, E3, CV) audit rétroréflecteur ayant une même épaisseur e' telle que, au moins approximativement,

$$e'.\sqrt{n} = 2,35e$$

2. Cible rétroréflectrice selon la revendication 1, caractérisée en ce que les lames transparentes constituent une pyramide transparente (CV) à section polygonale disposée en regard du rétroréflecteur en coin de cube et ayant sa normale confondue avec la normale de ce dernier.

3. Cible rétroréflectrice selon la revendication 2, caractérisée en ce que cette pyramide est de section triangulaire équilatérale.

4. Cible rétroréflectrice selon la revendication 3, caractérisée en ce que cette pyramide est au moins approximativement un coin de cube.

5. Cible rétroréflectrice selon l'une quelconque des revendications 1 à 4, caractérisée en ce que cette cible comporte une pluralité de rétroréflecteurs en coin de cube creux qui admettent un même point de référence (O) situé sur leurs normales respectives, chacun de ces rétroréflecteurs en coin de cube étant muni de trois lames transparentes à faces parallèles, parallèles aux surfaces réfléchissantes dudit rétroréflecteur à faces parallèles.

6. Cible rétroréflectrice selon la revendication 5, caractérisée en ce que le point de référence (O) est à une même distance (e) des faces réfléchissantes de chaque rétroréflecteur en coin de cube et les lames transparentes ont un même indice de réfraction $n$ et une même épaisseur e'.

7. Cible selon la revendication 6, caractérisée en ce que les coins de cube forment conjointement au moins une partie d'un cube entourant la pluralité de rétroréflecteurs en coin de cube.

8. Cible rétroréflectrice selon l'une quelconque des revendications 1 à 7, caractérisée en ce que cette cible comporte huit rétroréflecteurs en coin de cube.

9. Cible rétroréflectrice selon l'une quelconque des revendications 1 à 8, caractérisée en ce que les lames transparentes sont en verre.

10. Cible rétroréflectrice selon l'une quelconque des revendications 1 à 9, caractérisée en ce que cette cible est un satellite (10) dont le centre de masse constitue le point de référence.

11. Cible rétroréflectrice selon la revendication 10, caractérisée en ce que ce satellite comporte pour les rétroréflecteurs en coin de cube une structure porteuse (20) formée de trois panneaux orthogonaux entre eux.

12. Cible rétroréflectrice selon la revendication 11, caractérisée en ce que ce satellite est en autorotation autour d'un axe (V-V) parallèle à deux de ces panneaux, le troisième panneau étant bordé par une masse de lestage.

Normale

Rayon incident

i

S

$d = d_0 \cos(i)$

$\delta$

$d_0$

0

Fig.1

Distance corrigée

Temps

0

$i \sim \pm 35°$

Courbe théorique

$-d_0$

Mesures expérimentales

T

I

Station-sol

t

Fig.2

Fig.3

Fig. 4

Fig. 5

Office européen
des brevets

**RAPPORT DE RECHERCHE EUROPEENNE**

Numero de la demande

EP 95 40 0492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 082 867 (OFFICE NATIONAL D'ETUDES ET DE RECHERCHES AEROSPATIALES) <br> * abrégé; revendications 1-4,8; figures 2,8 * <br> * page 2, colonne de droite, ligne 121 - page 3, colonne de gauche, ligne 50 * <br> --- | 1 | G02B5/122 <br> G01S7/48 |
| D,A | EP-A-0 506 517 (AEROSPATIALE SOCIETE NATIONALE INDUSTRIELLE) <br> * abrégé; revendication 1; figure 1 * <br> --- | 1 | |
| A | US-A-5 207 003 (NAOSHI YAMADA, TOMOAKI TAKEYA) <br> * abrégé; revendication 6; figure 4 * <br> ----- | 1 | |
| | | | **DOMAINES TECHNIQUES RECHERCHES (Int.Cl.6)** |
| | | | G02B <br> G01S <br> B64G |

Le présent rapport a été établi pour toutes les revendications

| Lieu de la recherche | Date d'achèvement de la recherche | Examinateur |
|---|---|---|
| LA HAYE | 7 Avril 1995 | Van Doremalen, J |

EPO FORM 1503 03.82 (P04C02)